# EUROPÄISCHE PATENTANMELDUNG

(11) **EP 4 607 336 A1**
(43) Veröffentlichungstag der Anmeldung: **27.08.2025**
(21) Anmeldenummer: 24159385.4
(22) Anmeldetag: 23.02.2024
(51) Int. Cl.: G06F 8/33, G06F 8/34, G06F 21/57

(54) **VERFAHREN UND VORRICHTUNG ZUM VERARBEITEN VON MIT EINER SOFTWAREKOMPONENTE FÜR EIN ERZEUGNIS ASSOZIIERTEN DATEN**

(71) Anmelder: Robert Bosch GmbH, 70442 Stuttgart (DE)
(72) Erfinder: Baur, Heiko, 73037 Goeppingen (DE); Kraemer, Florian, 74629 Pfedelbach (DE); Tuchscherer, Daniel, 70736 Fellbach (DE); Bauer, Armin, 71332 Waiblingen (DE); Hartl, Matthias, 91795 Dollnstein (DE)

(57) **Zusammenfassung**

Verfahren, beispielsweise computerimplementiertes Verfahren, zum Verarbeiten von mit einer Softwarekomponente für ein Erzeugnis assoziierten Daten, aufweisend: Bereitstellen von ersten Informationen, die wenigstens einen mit der Softwarekomponente assoziierten, beispielsweise für eine Domäne des Erzeugnisses spezifischen, Aspekt charakterisieren, und, optional, Ergänzen der Softwarekomponente um die ersten Informationen.

## Beschreibung

### Stand der Technik

Die Offenbarung betrifft ein Verfahren zum Verarbeiten von mit einer Softwarekomponente für ein Erzeugnis assoziierten Daten.

Die Offenbarung betrifft ferner eine Vorrichtung zum Verarbeiten von mit einer Softwarekomponente für ein Erzeugnis assoziierten Daten.

### Offenbarung der Erfindung

Manche Beispiele beziehen sich auf ein Verfahren, beispielsweise ein computerimplementiertes Verfahren, zum Verarbeiten von mit einer Softwarekomponente für ein Erzeugnis assoziierten Daten, aufweisend: Bereitstellen von ersten Informationen, die wenigstens einen mit der Softwarekomponente assoziierten, beispielsweise für eine Domäne des Erzeugnisses spezifischen, Aspekt charakterisieren, und, optional, Ergänzen der Softwarekomponente um die ersten Informationen.

Bei manchen Beispielen ermöglicht das Bereitstellen der ersten Informationen ein effizientes Verarbeiten der Softwarekomponente, beispielsweise in einer oder mehreren Stufen einer Entwicklungsumgebung. Bei manchen Beispielen kann z.B. eine vergleichsweise modular aufgebaute Entwicklungsumgebung, z.B. auf der Basis eines LLVM-Compiler-Systems, verwendet werden, und die Vorsehung der ersten Informationen ermöglicht beispielsweise eine Ergänzung eines modularen Entwicklungsprozesses, z.B. auf der Basis des LLVM-Compiler-Systems, mit einer, z.B. nach vorne gerichteten, Annotation, wie sie z.B. durch die ersten Informationen charakterisierbar bzw. bildbar ist.

Bei manchen Beispielen kann die Annotation, die z.B. als Meta-Information aufgefasst werden kann, z.B. eine Intermediate Representation eines LLVM-Systems dahingehend ergänzen, dass domänenspezifische Informationen z.B. an ein Backend weitergereicht werden. Bei manchen Beispielen beziehen sich die domänenspezifischen Informationen z.B. auf einen automotive (z.B. Kraftfahrzeug) - Bereich.

Bei manchen Beispielen charakterisiert die Softwarekomponente wenigstens eines der folgenden Elemente: a) Quellcode, beispielsweise in einer Hochsprache, wie z.B. C oder C++, oder b) Bytecode, beispielsweise virtueller Bytecode, oder c) beispielsweise plattformunabhängige Repräsentation, beispielsweise sog. intermediate representation, beispielsweise gemäß dem "LLVM Project", s. z.B. www.llvm.org, oder d) Maschinencode, beispielsweise ausführbar auf einer Recheneinrichtung.

Bei manchen Beispielen ist vorgesehen, dass das Verfahren aufweist: Vorsehen wenigstens eines Teils der ersten Informationen in Form von Metainformationen, beispielsweise für wenigstens eine Stufe eines mit der Softwarekomponente assoziierten Entwicklungsprozesses, beispielsweise für ein Backend eines Compilers.

Bei manchen Beispielen ist vorgesehen, dass das Verfahren aufweist: Verwenden der ersten Informationen für wenigstens einen Verarbeitungsschritt und/oder für wenigstens eine Stufe eines mit der Softwarekomponente assoziierten Entwicklungsprozesses.

Bei manchen Beispielen ist vorgesehen, dass das Verwenden aufweist: Weiterreichen wenigstens eines Teils der ersten Informationen an ein Backend einer Entwicklungsumgebung für die Softwarekomponente, beispielsweise an ein Backend eines Compilers für die Softwarekomponente.

Bei manchen Beispielen ist vorgesehen, dass die Entwicklungsumgebung wenigstens einen Compiler mit einem Frontend und einem Backend aufweist, wobei das Verfahren wenigstens eines der folgenden Elemente aufweist: a) Bereitstellen wenigstens eines Teils der ersten Informationen für das Frontend des Compilers, oder b) Bereitstellen wenigstens eines Teils der ersten Informationen für das Backend des Compilers.

Bei manchen Beispielen ist vorgesehen, dass die ersten Informationen wenigstens eines der folgenden Elemente aufweisen: a) Informationen bezüglich einer Rückwirkungsfreiheit, beispielsweise assoziiert mit wenigstens einem Integritätsziel, beispielsweise gemäß Automotive Safety Integrity Level, ASIL, oder b) Informationen, die ein Integritätsziel charakterisieren, oder c) Informationen zur Abwehr von Seitenkanalangriffen, d) Informationen für eine Erzeugung von Code für die Erzeugung von Profiling-Informationen.

Bei manchen Beispielen ist vorgesehen, dass das Verfahren aufweist: Erzeugen von Code zur Steigerung einer Resistenz gegen Seitenkanalangriffe, beispielsweise in einem bzw. dem Backend eines bzw. des Compilers, und, optional, Verwenden des Codes zur Steigerung der Resistenz gegen Seitenkanalangriffe.

Manche Beispiele beziehen sich auf eine Vorrichtung zur Ausführung des Verfahrens gemäß der Offenbarung.

Manche Beispiele beziehen sich auf ein computerlesbares Speichermedium, umfassend Befehle, die bei der Ausführung durch einen Computer diesen veranlassen, das Verfahren gemäß der Offenbarung auszuführen.

Manche Beispiele beziehen sich auf ein Computerprogramm, umfassend Befehle, die bei der Ausführung des Computerprogramms durch einen Computer diesen veranlassen, das Verfahren gemäß der Offenbarung auszuführen.

Manche Beispiele beziehen sich auf ein Datenträgersignal, das das Computerprogramm gemäß der Offenbarung charakterisiert und/oder überträgt.

Manche Beispiele beziehen sich auf eine Verwendung des Verfahrens gemäß der Offenbarung und/oder der Vorrichtung gemäß der Offenbarung und/oder des computerlesbaren Speichermediums gemäß der Offenbarung und/oder des Computerprogramms gemäß der Offenbarung und/oder des Datenträgersignals gemäß der Offenbarung für wenigstens eines der folgenden Elemente: a) Annotieren wenigstens eines Teils der Softwarekomponente, beispielsweise mittels anwendungsspezifischer Informationen, oder b) Bereitstellen von beispielsweise anwendungsspezifischen Informationen für ein Backend eines Compilers, oder c) Steigern einer Sicherheit beispielsweise der Softwarekomponente.

Weitere Merkmale, Anwendungsmöglichkeiten und Vorteile der Erfindung ergeben sich aus der nachfolgenden Beschreibung von Beispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Ansprüchen oder deren Rückbeziehung sowie unabhängig von ihrer Formulierung bzw. Darstellung in der Beschreibung bzw. in der Zeichnung.

In der Zeichnung zeigt:
- Fig. 1: schematisch ein vereinfachtes Flussdiagramm,
- Fig. 2: schematisch ein vereinfachtes Flussdiagramm,
- Fig. 3: schematisch ein vereinfachtes Flussdiagramm,
- Fig. 4: schematisch ein vereinfachtes Blockdiagramm,
- Fig. 5: schematisch ein vereinfachtes Blockdiagramm,
- Fig. 6: schematisch ein vereinfachtes Blockdiagramm,
- Fig. 7: schematisch ein vereinfachtes Blockdiagramm,
- Fig. 8: schematisch ein vereinfachtes Blockdiagramm,
- Fig. 9: schematisch Beispiele von Verwendungen.

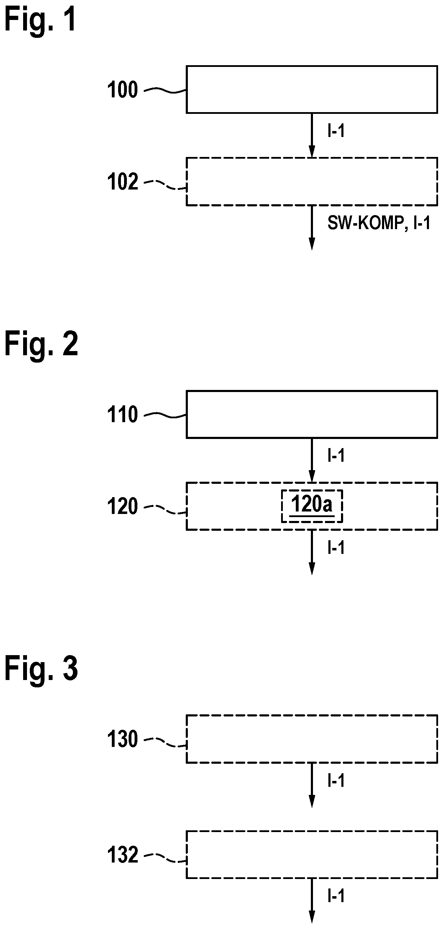

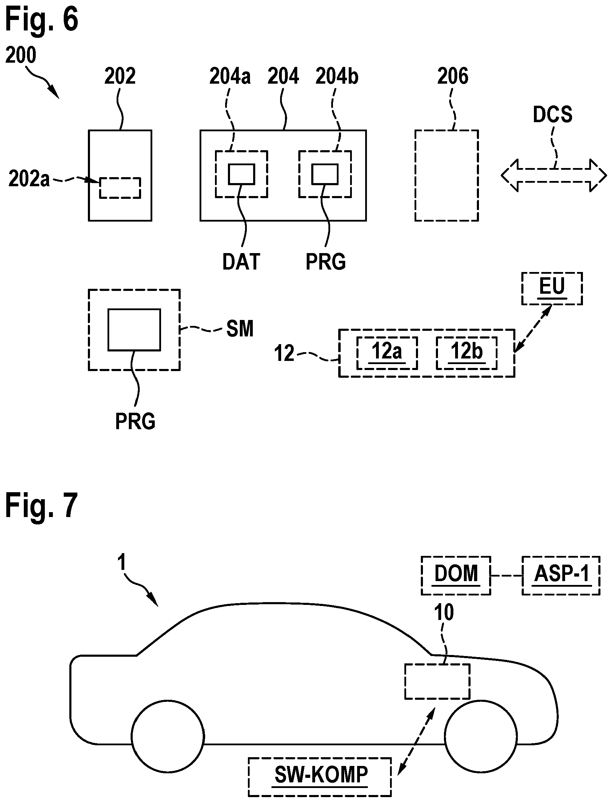

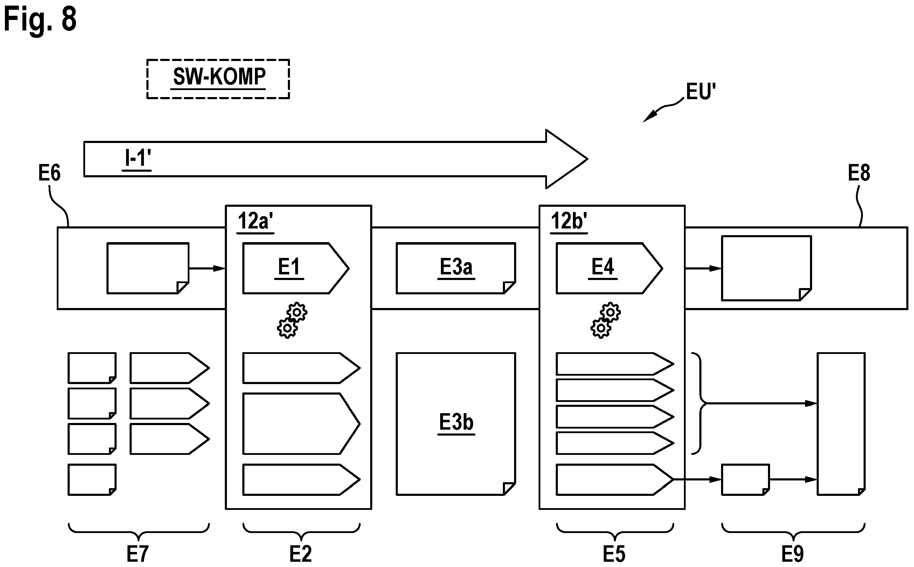

Manche Beispiele, Fig. 1, beziehen sich auf ein Verfahren, beispielsweise ein computerimplementiertes Verfahren, zum Verarbeiten von mit einer Softwarekomponente SW-KOMP (Fig. 7) für ein Erzeugnis 1, 10, assoziierten Daten, aufweisend: Bereitstellen 100 (Fig. 1) von ersten Informationen 1-1, die wenigstens einen mit der Softwarekomponente SW-KOMP assoziierten, beispielsweise für eine Domäne DOM (s. Fig. 7) des Erzeugnisses 1, 10 spezifischen, Aspekt ASP-1 charakterisieren, und, optional, Ergänzen 102 der Softwarekomponente SW-KOMP um die ersten Informationen I-1. Bei manchen Beispielen ermöglicht dies ein effizientes Verarbeiten der Softwarekomponente SW-KOMP, beispielsweise in einer oder mehreren Stufen einer Entwicklungsumgebung EU (s.u. zu Fig. 6, 8).

Bei manchen Beispielen charakterisiert die Softwarekomponente SW-KOMP wenigstens eines der folgenden Elemente: a) Quellcode, beispielsweise in einer Hochsprache, wie z.B. C oder C++, oder b) Bytecode, beispielsweise virtueller Bytecode, oder c) beispielsweise plattformunabhängige Repräsentation, beispielsweise sog. intermediate representation, beispielsweise gemäß dem "LLVM Project", s. z.B. www.llvm.org, oder d) Maschinencode, beispielsweise ausführbar auf einer Recheneinrichtung.

Bei manchen Beispielen, Fig. 7, ist das Erzeugnis beispielsweise ein Fahrzeug, beispielsweise Kraftfahrzeug, 1, oder ein Steuergerät 10 für ein Fahrzeug, beispielsweise Kraftfahrzeug, 1.

Bei manchen Beispielen, Fig. 2, ist vorgesehen, dass das Verfahren aufweist: Vorsehen 110 wenigstens eines Teils der ersten Informationen I-1 in Form von Metainformationen, beispielsweise für wenigstens eine Stufe eines mit der Softwarekomponente SW-KOMP assoziierten Entwicklungsprozesses, beispielsweise für ein Backend 12b (Fig. 6) eines Compilers 12.

Bei manchen Beispielen, Fig. 2, ist vorgesehen, dass das Verfahren aufweist: Verwenden 120 der ersten Informationen I-1 für wenigstens einen Verarbeitungsschritt und/oder für wenigstens eine Stufe eines mit der Softwarekomponente SW-KOMP assoziierten Entwicklungsprozesses.

Bei manchen Beispielen, Fig. 2, ist vorgesehen, dass das Verwenden 120 aufweist: Weiterreichen 120a wenigstens eines Teils der ersten Informationen I-1 an ein Backend 12b (Fig. 6) einer Entwicklungsumgebung EU für die Softwarekomponente SW-KOMP, beispielsweise an ein Backend 12b eines Compilers 12 für die Softwarekomponente SW-KOMP.

Bei manchen Beispielen, Fig. 3, 6, ist vorgesehen, dass die Entwicklungsumgebung EU wenigstens einen Compiler 12 mit einem Frontend 12a und einem Backend 12b aufweist, wobei das Verfahren wenigstens eines der folgenden Elemente aufweist: a) Bereitstellen 130 wenigstens eines Teils der ersten Informationen I-1 für das Frontend 12a des Compilers 12, oder b) Bereitstellen 132 wenigstens eines Teils der ersten Informationen I-1 für das Backend 12b des Compilers 12.

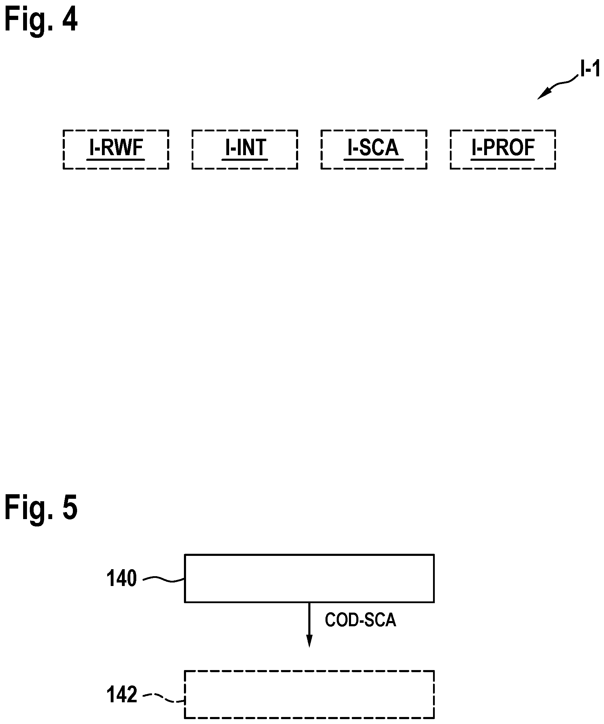

Bei manchen Beispielen, Fig. 4, ist vorgesehen, dass die ersten Informationen I-1 wenigstens eines der folgenden Elemente aufweisen: a) Informationen I-RWF bezüglich einer Rückwirkungsfreiheit, beispielsweise assoziiert mit wenigstens einem Integritätsziel, beispielsweise gemäß Automotive Safety Integrity Level, ASIL, oder b) Informationen I-INT, die ein Integritätsziel charakterisieren, oder c) Informationen I-SCA zur Abwehr von Seitenkanalangriffen, d) Informationen I-PROF für eine Erzeugung von Code für die Erzeugung von Profiling-Informationen.

Bei manchen Beispielen werden ein oder mehrere der folgenden Aspekte, beispielsweise für die Informationen I-RWF bezüglich der Rückwirkungsfreiheit, betrachtet. Bei manchen Beispielen kann mittels der ersten Informationen I-1 eine Rückwirkungsfreiheit (z.B. freedom from interference) unterschiedlicher Integritätsziele (z.B. gemäß ASIL) erreicht werden, beispielsweise, um Sicherheitsanforderungen einzuhalten.

Bei manchen Beispielen können die ersten Informationen I-1 beispielsweise dazu verwendet werden, eine Konfiguration für Speicherschutzmaßnahmen, z.B. für wenigstens eine Speicherschutzeinrichtung, zu erstellen, beispielsweise automatisch, also z.B. ohne manuelle Interaktion.

Bei manchen Beispielen können die ersten Informationen I-1 z.B. dafür verwendet werden, eine Rückwirkungsfreiheit automatisch zu realisieren. Optional kann bei manchen Beispielen z.B. die Konfiguration für die Speicherschutzmaßnahmen geprüft werden durch einen menschlichen Experten.

Bei manchen Beispielen werden ein oder mehrere der folgenden Aspekte, beispielsweise für die Informationen I-INT, die ein Integritätsziel charakterisieren, betrachtet. Bei manchen Beispielen setzen vergleichsweise hohe Sicherheitsziele (z.B. ASIL-C/D) z.B. eine Redundanz voraus, z.B. um eine geforderte Fehlererkennungsrate als Risikominimierung (z.B. 99% Erkennung Einzelfehler bei ASIL-D) zu erreichen. Wäre in einem Backend 12b z.B. eine ASIL-Einstufung bekannt, so könnte gezielt Redundanz zum Beispiel mit Coded-Processing realisiert werden. Bei manchen Beispielen können demnach die ersten Information I-1, beispielsweise die Informationen I-INT, die ein Integritätsziel charakterisieren, dazu verwendet werden, das Backend 12b über die ASIL-Einstufung zu informieren.

Bei manchen Beispielen werden ein oder mehrere der folgenden Aspekte, beispielsweise für die Informationen I-SCA zur Abwehr von Seitenkanalangriffen, betrachtet.

Bei manchen Beispielen kann eine automatische Generierung von Code, z.B. in einem Backend 12b, eine Resistenz gegen Seitenkanalangriffe steigern. Bei manchen Beispielen kann es z.B. ein Ziel sein, eine Integrität und/oder eine Vertraulichkeit eines Datums bzw. eines Rechenschrittes sicherzustellen.

Bei manchen Beispielen kann die Software-Komponente SW-KOMP (Fig. 7), z.B. ein Code, z.B. um folgende Informationen, beispielsweise Meta-Informationen, angereichert werden, die wenigstens eines der folgenden Elemente charakterisieren: • Ein Datum verlässt einen gesicherten Bereich physikalisch nicht (Schutzziel: Vertraulichkeit), • Die Integrität eines Datums ist sicher zu stellen (Schutzziel: Integrität), • Eine Berechnung ist aus Sicherheitsaspekten mehrfach redundant durchzuführen (Schutzziel: Integrität), • Ein Stromverbrauch ist konstant zu halten (Verhindern einer SPA/DPA Analyse, Schutzziel: Vertraulichkeit), • Die Verarbeitungsdauer eines Rechenschrittes ist konstant zu halten (Schutzziel: Vertraulichkeit), • Eine Rechenoperation ist so zu rechnen, dass über die elektromagnetische Abstrahlung keine Rückschlüsse gezogen werden können. (Schutzziel: Vertraulichkeit), • Eine Rechenoperation ist physikalisch über die Fläche des Prozessors zu verteilen, z.B. so, dass eine gezielte Platzierung von Sonden schwierig wird. (Schutzziel: Vertraulichkeit), • Es soll keine Schallanalyse möglich sein. (Schutzziel: Vertraulichkeit). Mit anderen Worten können bei manchen Beispielen die ersten Informationen I-1 wenigstens eine der vorstehend als Beispiel genannten Informationen I-SCA oder eine beliebige Kombination hieraus aufweisen.

Bei manchen Beispielen können die ersten Informationen I-1 charakterisieren, wie z.B. im Falle eines Angriffs (z.B. auf ein die Softwarekomponente SW-KOMP aufweisendes bzw. auf ein mit der Softwarekomponente SW-KOMP assoziiertes Erzeugnis 1, 10) zu reagieren ist (z.B. Integrität eines Datums stimmt nicht, es wurde eine Glitch-Attacke festgestellt, ... ). Beispielsweise: a) könnte man (z.B. das Erzeugnis) im Falle eines erkannten Angriffs mit der Rechenoperation abbrechen und in einen definierten Fehlerzustand gehen, oder b) man (z.B. das Erzeugnis) könnte die Rechenoperation wiederholen, oder c) man (z.B. das Erzeugnis) könnte die Rechenoperation n mal wiederholen und dann abbrechen, oder d) man (z.B. das Erzeugnis) könnte Berechnungen auf einer anderen Vorrichtung (z.B. "device") wiederholen, usw. Mit anderen Worten können bei manchen Beispielen die ersten Informationen I-1 wenigstens eine der vorstehend als Beispiel genannten Informationen oder eine beliebige Kombination hieraus aufweisen, auf deren Basis das Erzeugnis z.B. auf einen Angriff reagieren kann.

Bei manchen Beispielen werden ein oder mehrere der folgenden Aspekte, beispielsweise für die Informationen I-PROF für die Erzeugung von Code für die Erzeugung von Profiling-Informationen betrachtet. Beispielsweise kann die Software-Komponente SW-KOMP (Fig. 7) um wenigstens eine Annotation angereichert werden, die z.B. in wenigstens einem nachgelagerten Prozessschritt Code erzeugt, der Profiling-Informationen generiert. Bei manchen Beispielen können die Profiling-Informationen wenigstens eines der folgenden Elemente aufweisen: a) Zeitinformationen, oder b) Daten, beispielsweise statistische Daten, über Funktionsaufrufe, oder c) Speicherverbrauch, oder d) Informationen über Caches (z.B. Cache Hits/Misses), oder e) Temperaturentwicklung, oder f) Stromverbrauch, oder g) idle cycles, oder h) Codeabdeckung, usw..

Bei manchen Beispielen, Fig. 5, ist vorgesehen, dass das Verfahren aufweist: Erzeugen 140 von Code COD-SCA zur Steigerung einer Resistenz gegen Seitenkanalangriffe, beispielsweise in einem bzw. dem Backend 12b eines bzw. des Compilers 12, und, optional, Verwenden 142 des Codes COD-SCA zur Steigerung der Resistenz gegen Seitenkanalangriffe.

Manche Beispiele, Fig. 6, beziehen sich auf eine Vorrichtung 200 zur Ausführung des Verfahrens gemäß der Offenbarung.

Bei weiteren Beispielen Fig. 6, ist vorgesehen, dass die Vorrichtung 200 aufweist: eine wenigstens einen Rechenkern 202a aufweisende Recheneinrichtung ("Computer") 202, eine der Recheneinrichtung 202 zugeordnete Speichereinrichtung 204 zur zumindest zeitweisen Speicherung wenigstens eines der folgenden Elemente: a) Daten DAT (z.B. mit der Software-Komponente SW-KOMP assoziierte Daten und/oder mit den ersten Informationen I-1 assoziierte Daten und/oder mit der Entwicklungsumgebung EU assoziierte Daten), b) Computerprogramm PRG, beispielsweise zur Ausführung des Verfahrens gemäß den Ausführungsformen.

Bei weiteren Beispielen weist die Speichereinrichtung 204 einen flüchtigen Speicher (z.B. Arbeitsspeicher (RAM)) 204a auf, und/oder einen nichtflüchtigen (NVM-) Speicher (z.B. Flash-EEPROM) 204b, oder eine Kombination hieraus oder mit anderen, nicht explizit genannten Speichertypen.

Weitere Beispiele beziehen sich auf ein computerlesbares Speichermedium SM, umfassend Befehle PRG, die bei der Ausführung durch einen Computer 202 diesen veranlassen, das Verfahren gemäß den Ausführungsformen auszuführen.

Weitere Beispiele beziehen sich auf ein Computerprogramm PRG, umfassend Befehle, die bei der Ausführung des Programms PRG durch einen Computer 202 diesen veranlassen, das Verfahren gemäß den Ausführungsformen auszuführen.

Weitere Beispiele beziehen sich auf ein Datenträgersignal DCS, das das Computerprogramm PRG gemäß den Ausführungsformen charakterisiert und/oder überträgt. Das Datenträgersignal DCS ist beispielsweise über eine optionale Datenschnittstelle 206 der Vorrichtung 200 empfangbar.

Fig. 8 zeigt schematisch ein vereinfachtes Blockdiagramm mit Aspekten einer Entwicklungsumgebung EU, bei der Aspekte gemäß den Beispielen verwendbar sind. Element E12a' symbolisiert Aspekte von einem oder mehreren Frontends, und Element 12b' symbolisiert Aspekte von einem oder mehreren Backends gemäß manchen Beispielen.

Element E1 symbolisiert ein Frontend, beispielsweise LLVM Frontend, wie es bei manchen Beispielen Teil der Entwicklungsumgebung EU für Softwarekomponenten sein kann, z.B. aufweisend ein LLVM-Compiler-System. Element E2 symbolisiert weitere optionale Frontends, beispielsweise vom Typ AST, oder Clang, usw.. Element E3a symbolisiert eine Zwischenrepräsentation (z.B. maschinennahe Zwischensprache), beispielsweise intermediate representation, IR, beispielsweise LLVM IR, die beispielsweise mit dem Frontend E1 assoziiert ist. Element E3b symbolisiert eine Zwischenrepräsentation, beispielsweise intermediate representation, IR, beispielsweise LLVM IR, die beispielsweise mit dem bzw. den Frontend(s) E2 assoziiert ist. Die Elemente E4, E5 symbolisieren jeweils Aspekte entsprechender Backends.

Element E6 symbolisiert Eingangsdaten für das Frontend E1, z.B. in Form eines Codes, repräsentiert z.B. in einer Programmiersprache für Computer, z.B. C oder C++. In vergleichbarer Weise symbolisiert Element E7 Eingangsdaten für das wenigstens eine weitere Frontend E2.

Element E8 symbolisiert einen Programmcode, beispielsweise Maschinencode, wie er bei manchen Beispielen durch das Backend E4 bildbar ist, z.B. basierend wenigstens auf den Eingangsdaten E6.

Element E9 symbolisiert einen Programmcode, beispielsweise Maschinencode, wie er bei manchen Beispielen durch das bzw. die optionalen Backends E5 bildbar ist, z.B. basierend wenigstens auf den Eingangsdaten E7.

Element I-1' symbolisiert wenigstens einen Teil der ersten Informationen I-1 gemäß der Offenbarung, der bei manchen Beispielen beispielsweise zur Annotation wenigstens mancher der Eingangsdaten E6, E7 (und/oder von daraus abgeleiteten Daten, s. z.B. die Blöcke E3a, E3b) verwendbar ist, und der beispielsweise in späteren Stufen E3a, E3b, E4, E5 verwendbar, beispielsweise auswertbar ist. Dadurch kann bei manchen Beispielen vorteilhaft wenigstens ein domänenspezifischer Aspekt ASP-1 berücksichtigt werden, der mit einer durch die Konfiguration gemäß Fig. 8 verarbeitbaren Softwarekomponente SW-KOMP assoziiert ist.

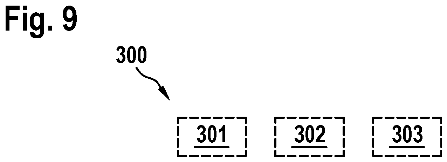

Manche Beispiele, Fig. 9, beziehen sich auf eine Verwendung 300 des Verfahrens gemäß der Offenbarung und/oder der Vorrichtung 200 gemäß der Offenbarung und/oder des computerlesbaren Speichermediums SM gemäß der Offenbarung und/oder des Computerprogramms PRG gemäß der Offenbarung und/oder des Datenträgersignals DCS gemäß der Offenbarung für wenigstens eines der folgenden Elemente: a) Annotieren 301 wenigstens eines Teils der Softwarekomponente SW-KOMP, beispielsweise mittels anwendungsspezifischer Informationen, oder b) Bereitstellen 302 von beispielsweise anwendungsspezifischen Informationen für ein Backend 12b eines Compilers 12, oder c) Steigern 303 einer Sicherheit beispielsweise der Softwarekomponente SW-KOMP.

Bei manchen Beispielen kann unter Verwendung des Prinzips gemäß der Offenbarung ein Aufwand für eine Entwicklung von Softwarekomponenten, beispielsweise für Steuergeräte, beispielsweise für Kraftfahrzeuge, reduziert werden, beispielsweise obwohl eine vergleichsweise modulare Konfiguration, z.B. gemäß Fig. 8, verwendet wird.

Bei manchen Beispielen kann unter Verwendung des Prinzips gemäß der Offenbarung eine Softwareentwicklung z.B. für den Automobil-Bereich und/oder andere Bereiche, in denen z.B. eine vergleichsweise hohe Varianz in Projekten mit z.B. unterschiedlichsten Rechenmaschinen, beispielsweise SoC (System-on-Chip), vorhanden ist, effizient gestaltet bzw. unterstützt werden.

Bei manchen Beispielen können unter Verwendung des Prinzips gemäß der Offenbarung z.B. Sicherheits-Anforderungen, z.B. nach ISO26262, umgesetzt, beispielsweise erfüllt, werden.

Bei manchen Beispielen können unter Verwendung des Prinzips gemäß der Offenbarung z.B. Optimierungen auf spezielle Anwendungsfälle ausgeführt werden, wobei beispielsweise domänenspezifische Informationen betreffend die speziellen Anwendungsfälle mittels der ersten Informationen I-1 charakterisierbar sind.

Bei manchen Beispielen können unter Verwendung des Prinzips gemäß der Offenbarung z.B. Cyber-Security Anforderungen, z.B. für den Automotive Bereich, umgesetzt, beispielsweise erfüllt, werden.

Bei manchen Beispielen kann das Prinzip gemäß der Offenbarung z.B. für eine Entwicklung von Fahrerassistenzanwendungen für Kraftfahrzeuge verwendet werden. Bei manchen Beispielen kann eine solche Entwicklung z.B. wenigstens drei Phasen aufweisen: 1) Concept-Phase, z.B. unter Verwendung von anderer Hardware als einer Ziel-Hardware für die Softwarekomponente SW-KOMP, 2) Embedded-Phase, wobei die Softwarekomponente SW-KOMP, z.B. eine Anwendung, auf die eigentliche Ziel-Hardware, z.B. ein SoC, gebracht wird, 3) Serie. Beispielsweise werden für die Serien-Phase neben einer Portierung der Software-Komponente SW-KOMP auf die Zielhardware (s. z.B. Phase: Embedded) auch, beispielsweise alle, Sicherheits- und/oder Security-Anforderungen implementiert und berücksichtigt, wobei eine vergleichsweise große Varianz der verwendeten Hardware zustande kommen kann. Durch eine Anreicherung von Prozessierungsschritten bei der Entwicklung der Softwarekomponenten z.B. mit domänenspezifischen Eigenschaften, z.B. basierend auf dem Prinzip gemäß der Offenbarung, kann die Entwicklung z.B. von Fahrerassistenzanwendungen für Kraftfahrzeuge effizient und flexibel gestaltet werden.

Bei manchen Beispielen kann das Prinzip gemäß der Offenbarung z.B. für eine Entwicklung von Softwarekomponenten für ADAS (Advanced Driver Assistance Systems)-Zentralsteuergeräte und/oder für Fahrzeugcomputer, beispielsweise Vehicle-Computer, verwendet werden.

Bei manchen Beispielen ist das Prinzip gemäß der Offenbarung vorteilhaft einsetzbar für Zielsysteme, die mit Chiplet-Technologie realisiert sind.

## Patentansprüche

1. Verfahren, beispielsweise computerimplementiertes Verfahren, zum Verarbeiten von mit einer Softwarekomponente (SW-KOMP) für ein Erzeugnis (1, 10) assoziierten Daten, aufweisend: Bereitstellen (100) von ersten Informationen (I-1), die wenigstens einen mit der Softwarekomponente (SW-KOMP) assoziierten, beispielsweise für eine Domäne (DOM) des Erzeugnisses (10) spezifischen, Aspekt (ASP-1) charakterisieren, und, optional, Ergänzen (102) der Softwarekomponente (SW-KOMP) um die ersten Informationen (I-1).

2. Verfahren nach Anspruch 1, wobei das Verfahren aufweist: Vorsehen (110) wenigstens eines Teils der ersten Informationen (I-1) in Form von Metainformationen, beispielsweise für wenigstens eine Stufe eines mit der Softwarekomponente (SW-KOMP) assoziierten Entwicklungsprozesses.

3. Verfahren nach wenigstens einem der vorstehenden Ansprüche, aufweisend: Verwenden (120) der ersten Informationen (I-1) für wenigstens einen Verarbeitungsschritt und/oder für wenigstens eine Stufe eines mit der Softwarekomponente (SW-KOMP) assoziierten Entwicklungsprozesses.

4. Verfahren nach Anspruch 3, wobei das Verwenden (120) aufweist: Weiterreichen (120a) wenigstens eines Teils der ersten Informationen (I-1) an ein Backend (12b; 12b') einer Entwicklungsumgebung (EU) für die Softwarekomponente (SW-KOMP), beispielsweise an ein Backend eines Compilers (12) für die Softwarekomponente (SW-KOMP).

5. Verfahren nach wenigstens einem der vorstehenden Ansprüche, wobei die Entwicklungsumgebung (EU) wenigstens einen Compiler (12) mit einem Frontend (12a) und einem Backend (12b) aufweist, wobei das Verfahren wenigstens eines der folgenden Elemente aufweist: a) Bereitstellen (130) wenigstens eines Teils der ersten Informationen (I-1) für das Frontend (12a) des Compilers (12), oder b) Bereitstellen (132) wenigstens eines Teils der ersten Informationen (I-1) für das Backend (12b) des Compilers (12).

6. Verfahren nach wenigstens einem der vorstehenden Ansprüche, wobei die ersten Informationen (I-1) wenigstens eines der folgenden Elemente aufweisen: a) Informationen (I-RWF) bezüglich einer Rückwirkungsfreiheit, beispielsweise assoziiert mit wenigstens einem Integritätsziel, beispielsweise gemäß Automotive Safety Integrity Level, ASIL, oder b) Informationen (I-INT), die ein Integritätsziel charakterisieren, oder c) Informationen (I-SCA) zur Abwehr von Seitenkanalangriffen, d) Informationen (I-PROF) für eine Erzeugung von Code für die Erzeugung von Profiling-Informationen.

7. Verfahren nach wenigstens einem der vorstehenden Ansprüche, aufweisend: Erzeugen (140) von Code (COD-SCA) zur Steigerung einer Resistenz gegen Seitenkanalangriffe, beispielsweise in einem bzw. dem Backend (12b) eines bzw. des Compilers (12), und, optional, Verwenden (142) des Codes (COD-SCA) zur Steigerung der Resistenz gegen Seitenkanalangriffe.

8. Vorrichtung (200) zur Ausführung des Verfahrens nach wenigstens einem der vorstehenden Ansprüche.

9. Computerlesbares Speichermedium (SM), umfassend Befehle (PRG), die bei der Ausführung durch einen Computer (202) diesen veranlassen, das Verfahren gemäß wenigstens einem der Ansprüche 1 bis 7 auszuführen.

10. Computerprogramm (PRG), umfassend Befehle, die bei der Ausführung des Computerprogramms (PRG) durch einen Computer (202) diesen veranlassen, das Verfahren gemäß wenigstens einem der Ansprüche 1 bis 7 auszuführen.

11. Datenträgersignal (DCS), das das Computerprogramm (PRG) gemäß Anspruch 10 charakterisiert und/oder überträgt.

12. Verwendung (300) des Verfahrens nach wenigstens einem der Ansprüche 1 bis 7 und/oder der Vorrichtung (200) nach Anspruch 8 und/oder des computerlesbaren Speichermediums (SM) nach Anspruch 9 und/oder des Computerprogramms (PRG) nach Anspruch 10 und/oder des Datenträgersignals (DCS) nach Anspruch 11 für wenigstens eines der folgenden Elemente: a) Annotieren (301) wenigstens eines Teils der Softwarekomponente (SW-KOMP), beispielsweise mittels anwendungsspezifischer Informationen, oder b) Bereitstellen (302) von beispielsweise anwendungsspezifischen Informationen für ein Backend (12b) eines Compilers (12), oder c) Steigern (303) einer Sicherheit beispielsweise der Softwarekomponente (SW-KOMP).

## Geänderte Patentansprüche

### Geänderte Patentansprüche gemäss Regel 137(2) EPÜ.

1. Computerimplementiertes Verfahren zum Verarbeiten von mit einer Softwarekomponente (SW-KOMP) für ein Erzeugnis (1, 10) assoziierten Daten, aufweisend: Bereitstellen (100) von ersten Informationen (I-1), die wenigstens einen mit der Softwarekomponente (SW-KOMP) assoziierten, für eine Domäne (DOM) des Erzeugnisses (10) spezifischen, Aspekt (ASP-1) charakterisieren, und Ergänzen (102) der Softwarekomponente (SW-KOMP) um die ersten Informationen (I-1).

2. Verfahren nach Anspruch 1, wobei das Verfahren aufweist: Vorsehen (110) wenigstens eines Teils der ersten Informationen (I-1) in Form von Metainformationen, beispielsweise für wenigstens eine Stufe eines mit der Softwarekomponente (SW-KOMP) assoziierten Entwicklungsprozesses.

3. Verfahren nach wenigstens einem der vorstehenden Ansprüche, aufweisend: Verwenden (120) der ersten Informationen (I-1) für wenigstens einen Verarbeitungsschritt und/oder für wenigstens eine Stufe eines mit der Softwarekomponente (SW-KOMP) assoziierten Entwicklungsprozesses.

4. Verfahren nach Anspruch 3, wobei das Verwenden (120) aufweist: Weiterreichen (120a) wenigstens eines Teils der ersten Informationen (I-1) an ein Backend (12b; 12b') einer Entwicklungsumgebung (EU) für die Softwarekomponente (SW-KOMP), beispielsweise an ein Backend eines Compilers (12) für die Softwarekomponente (SW-KOMP).

5. Verfahren nach wenigstens einem der vorstehenden Ansprüche, wobei die Entwicklungsumgebung (EU) wenigstens einen Compiler (12) mit einem Frontend (12a) und einem Backend (12b) aufweist, wobei das Verfahren wenigstens eines der folgenden Elemente aufweist: a) Bereitstellen (130) wenigstens eines Teils der ersten Informationen (I-1) für das Frontend (12a) des Compilers (12), oder b) Bereitstellen (132) wenigstens eines Teils der ersten Informationen (I-1) für das Backend (12b) des Compilers (12).

6. Verfahren nach wenigstens einem der vorstehenden Ansprüche, wobei die ersten Informationen (I-1) wenigstens eines der folgenden Elemente aufweisen: a) Informationen (I-RWF) bezüglich einer Rückwirkungsfreiheit, beispielsweise assoziiert mit wenigstens einem Integritätsziel, beispielsweise gemäß Automotive Safety Integrity Level, ASIL, oder b) Informationen (I-INT), die ein Integritätsziel charakterisieren, oder c) Informationen (I-SCA) zur Abwehr von Seitenkanalangriffen, d) Informationen (I-PROF) für eine Erzeugung von Code für die Erzeugung von Profiling-Informationen.

7. Verfahren nach wenigstens einem der vorstehenden Ansprüche, aufweisend: Erzeugen (140) von Code (COD-SCA) zur Steigerung einer Resistenz gegen Seitenkanalangriffe, beispielsweise in einem bzw. dem Backend (12b) eines bzw. des Compilers (12), und, optional, Verwenden (142) des Codes (COD-SCA) zur Steigerung der Resistenz gegen Seitenkanalangriffe.

8. Vorrichtung (200) zur Ausführung des Verfahrens nach wenigstens einem der vorstehenden Ansprüche.

9. Computerlesbares Speichermedium (SM), umfassend Befehle (PRG), die bei der Ausführung durch einen Computer (202) diesen veranlassen, das Verfahren gemäß wenigstens einem der Ansprüche 1 bis 7 auszuführen.

10. Computerprogramm (PRG), umfassend Befehle, die bei der Ausführung des Computerprogramms (PRG) durch einen Computer (202) diesen veranlassen, das Verfahren gemäß wenigstens einem der Ansprüche 1 bis 7 auszuführen.

11. Datenträgersignal (DCS), das das Computerprogramm (PRG) gemäß Anspruch 10 charakterisiert und/oder überträgt.

12. Verwendung (300) des Verfahrens nach wenigstens einem der Ansprüche 1 bis 7 und/oder der Vorrichtung (200) nach Anspruch 8 und/oder des computerlesbaren Speichermediums (SM) nach Anspruch 9 und/oder des Computerprogramms (PRG) nach Anspruch 10 und/oder des Datenträgersignals (DCS) nach Anspruch 11 für wenigstens eines der folgenden Elemente: a) Annotieren (301) wenigstens eines Teils der Softwarekomponente (SW-KOMP), beispielsweise mittels anwendungsspezifischer Informationen, oder b) Bereitstellen (302) von beispielsweise anwendungsspezifischen Informationen für ein Backend (12b) eines Compilers (12), oder c) Steigern (303) einer Sicherheit beispielsweise der Softwarekomponente (SW-KOMP).
